# FASCICULE DE BREVET EUROPEEN

(11) **EP 1 376 984 B1**
(45) Date de publication et mention de la délivrance du brevet: **27.08.2014**
(21) Numéro de dépôt: 03014207.9
(22) Date de dépôt: 25.06.2003
(51) Int. Cl.: H04L 29/06

(54) **Système d'accès à un réseau d'informations offrant des services personnalisés**
System zum Zugriff auf ein personalisierte Dienste bietendes Informationsnetz
System for accessing an information network offering personalized services

(30) Priorité: 28.06.2002 FR 0208125
(43) Date de publication de la demande: 02.01.2004
(73) Titulaire: Orange, 75015 Paris (FR)
(72) Inventeur: Mittig, Karel, 14000 Caen (FR); Daridan, Olivier, 14210 Cheux (FR); Goutard, Cédric, 14440 Douvres La Delivrande (FR)

(56) Documents cités:
- EP-A- 1 024 642
- WO-A-99/30460
- US-A- 6 067 623
- US-A1- 2002 029 260

## Description

L'invention concerne le domaine des services offerts aux abonnés de réseaux de type Internet.

Afin de rendre leurs offres d'abonnement attractives, certains fournisseurs d'accès à Internet proposent des services à leurs clients. Ils proposent par exemple des services de compression des données, de contrôle parental, d'antivirus, etc.

Les services proposés sont mis en oeuvre par des applications spécifiques installées sur les plates-formes d'accès des opérateurs, ce qui présente l'avantage de fournir un service transparent à l'utilisateur.

Dans la plupart des systèmes actuels, le flux des données circulant entre un terminal client et le réseau est filtré par chaque application.

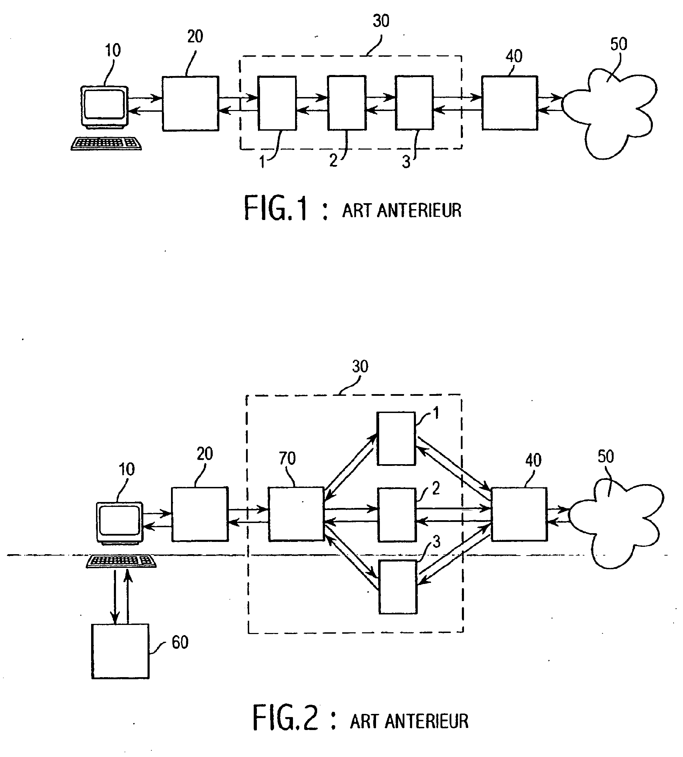

La figure 1 illustre un exemple de système permettant la mise en oeuvre de ces services. Sur cette figure, un terminal client 10 est connecté à un serveur d'accès 20 lui donnant accès à la plate-forme 30 d'un fournisseur. La plate-forme 30 inclut une pluralité de serveurs 1, 2, 3, chaque serveur étant destiné à fournir un service donné. Les flux de données transitant entre le terminal client 10 et le réseau 50 passent successivement par chacun des serveurs 1, 2, 3. Chaque serveur détermine si le client a ou non souscrit au service qu'il fournit et dans l'affirmative traite en conséquence les données qu'il reçoit. Puis il transmet ces données au serveur suivant.

L'inconvénient d'un tel système est que l'ensemble des flux échangés entre le client 10 et le réseau 50 passe par tous les serveurs 1, 2, 3, même si le client n'a souscrit à aucun service ou a souscrit uniquement à certains services.

Il en résulte que les serveurs 1, 2, 3 doivent pouvoir supporter une charge de traitement importante. En outre, les délais de transfert des données à travers l'ensemble des serveurs 1, 2, 3 peuvent s'avérer relativement longs, ces délais étant liés en particulier au fait que chaque serveur doit déterminer si le client a ou non souscrit à un service.

Un autre type de système existant consiste à classer les clients dans des sous-ensembles d'adresses IP (Internet Protocole), chaque sous-ensemble étant associé à une combinaison de services. Dans ce système, les données sont transmises aux serveurs fournissant des services en fonction de l'adresse IP qu'elles contiennent.

Ainsi qu'illustré sur la figure 2, un tel système comprend un serveur d'authentification 60 permettant d'affecter à chaque client 10 une adresse IP lorsque celui-ci se connecte au réseau Internet, cette adresse IP étant choisie dans le sous-groupe correspondant aux services auxquels il a souscrit. Le terminal client 10 est connecté à un serveur d'accès 20 lui donnant accès à la plate-forme 30 d'un opérateur. Cette plate-forme 30 inclut un routeur de coeur de plate-forme 70 et une pluralité de serveurs 1, 2, 3, chaque serveur étant destiné à fournir un service donné. Le routeur de coeur 70 détecte l'adresse IP du client et transmet les flux de données uniquement aux serveurs 1, 2 ou 3 correspondants aux services auxquels le client a souscrit.

Ce système garantit de meilleures performances que le système de la figure 1 dans la mesure où les flux de données ne transitent que par les serveurs concernés et que ces serveurs n'ont pas à déterminer si un client a ou non souscrit à un service.

Ce système présente néanmoins certains inconvénients. En particulier, les sous-groupes des adresses IP ne peuvent pas être facilement modifiés. Ces sous-groupes doivent par conséquent être dimensionnés pour contenir un grand nombre d'adresses de manière à pouvoir s'adapter aux fluctuations du nombre de connexions.

En outre, le nombre des sous-ensembles d'adresses IP nécessaires augmente de façon croissante avec le nombre de services proposés. En effet, l'ajout d'un service double le nombre de sous-groupes d'adresses IP nécessaires.

De plus, les adresses IP des clients étant figées durant la durée de la connexion, ceux-ci ne peuvent modifier les services auxquels ils ont souscrit en cours de connexion.

Enfin, dans le cas de location de liaisons Internet ou autres services destinés aux professionnels, il n'est généralement pas possible de modifier les adresses IP attribuées, donc de modifier les services offerts.

Le document EP 1024642 décrit un dispositif d'accès a un réseau comprenant un module de marquage d'un paquet de données en fonction d'un niveau de qualité de service associé au client.

Un but de l'invention est de proposer un système plus souple que les systèmes de l'art antérieur. En particulier, ce système devrait pouvoir s'adapter à un nombre important de connexions et permettre de modifier facilement les services auxquels ont souscrit les abonnés.

A cet effet, l'invention propose une plate-forme d'accès à un réseau offrant des services personnalisés, la plate-forme d'accès étant apte à répartir des données vers des serveurs, chaque serveur étant destiné à traiter des données qu'il reçoit pour fournir un service donné, dans lequel la plate-forme d'accès comprend
- une base de données contenant des informations relatives à un ensemble de clients, chaque client étant associé à un ensemble de services auxquels il a souscrit,
- un module de marquage apte à insérer dans un paquet de données en provenance d'un terminal client une information de marquage relative au(x) service(s) associé(s) au client dans la base de données,
- un module de routage apte à diriger le paquet de données en provenance du terminal client vers un ou des serveur(s) en fonction de l'information de marquage insérée dans le paquet de données par le module de marquage caractérisé en ce que le module de marquage est apte à enregistrer la valeur initiale du champ dans le paquet de données qu'il reçoit et à remplacer cette valeur par une information de marquage et en ce que après traitement du paquet de données par le ou les serveur(s) de service, le module de marquage est apte à rétablir la valeur initiale du champ.

L'invention propose également un système d'accès à un réseau comprenant la plate-forme d'accès.

Le système d'accès de l'invention réalise un aiguillage des données au coeur du réseau.

Le système d'accès de l'invention permet avantageusement de router les flux de données en fonction d'une information relative aux services auxquels le client a souscrit.

Par conséquent, dans ce système, le routage des flux de données ne dépend pas de l'adresse IP des clients. Ce système permet donc de supprimer les contraintes sur le choix des adresses IP des clients.

Ce système permet en outre de modifier facilement les services associés à un client en cours de connexion. Il suffit pour cela de modifier ces services dans la base de données.

Dans une mise en oeuvre de l'invention, le système comprend en outre un serveur d'authentification apte à attribuer au terminal client une adresse IP lorsque celui-ci se connecte à un serveur d'accès à la plate-forme, ledit serveur d'authentification étant apte à transmettre à la base de données des informations associant l'adresse IP et l'identité du client, et la base de données étant apte à recevoir lesdites informations et à transmettre au module de marquage des informations associant l'adresse IP du client et les services souscrits par ce client, le module de marquage étant apte à lire l'adresse IP du paquet de données qu'il reçoit et en fonction de cette adresse, à insérer dans ce paquet de données une information de marquage.

L'information de marquage est inscrite par le module de marquage dans un champ prédéfini du paquet de données.

Selon l'invention, le module de marquage est apte à enregistrer la valeur initiale du champ du paquet de données qu'il reçoit et à remplacer cette valeur par une information de marquage et après traitement du paquet de données par le ou les serveur(s) de service, le module de marquage est apte à rétablir la valeur initiale du champ.

Ainsi, le module de marquage réalise également une fonction de démarquage des données transitant des serveurs de service vers les clients de sorte que ce marquage soit totalement transparent pour les clients.

Par exemple, l'information de marquage est inscrite par le module de marquage dans un champ TOS (Type de service) du paquet de données.

Alternativement, l'information de marquage est inscrite par le module de marquage dans un champ OPTIONS du paquet de données.

Selon une mise en oeuvre possible de l'invention, l'information de marquage est codée par une séquence de bits, chaque bit étant associé à un service.

Selon une autre mise en oeuvre possible de l'invention, l'information de marquage est codée par une séquence de bits, chaque séquence étant associée à un bouquet de services.

L'invention concerne également un procédé d'accès à un réseau offrant des services personnalisés selon la revendication 7.

Le procédé de l'invention peut comprendre les étapes selon lesquelles :
- lorsque le client souscrit à un ou des service(s) proposés par le fournisseur d'accès, des informations relatives au client et au(x) service(s) au(x)quel(s) il a souscrit sont enregistrées dans une base de données,
- lorsque le terminal client se connecte à un serveur d'accès à la plate-forme, un serveur d'authentification attribue audit terminal client une adresse IP,
- ledit serveur d'authentification transmet à la base de données des informations associant l'adresse IP et l'identité du client,
- la base de données transmet au module de marquage des informations associant l'adresse IP du client et les services souscrits par ce client,
- le module de marquage lit l'adresse IP du paquet de données qu'il reçoit et en fonction de cette adresse, insère dans ce paquet de données une information de marquage.

D'autres caractéristiques et avantages ressortiront encore de la description qui suit laquelle est purement illustrative et non limitative et doit être lue en regard des figures annexées parmi lesquelles :
- la figure 1 est une représentation schématique d'un premier type de système de d'accès à un réseau de l'art antérieur,
- la figure 2 est une représentation schématique d'un deuxième type de système d'accès à un réseau de l'art antérieur,
- la figure 3 est une représentation schématique d'un système d'accès conforme à un mode de réalisation de l'invention,
- la figure 4 est une représentation schématique de la structure d'un paquet de données IP,
- les figures 5 et 6 donnent des exemples de codage de l'information insérée par le module de marquage en fonction des services associés au client.

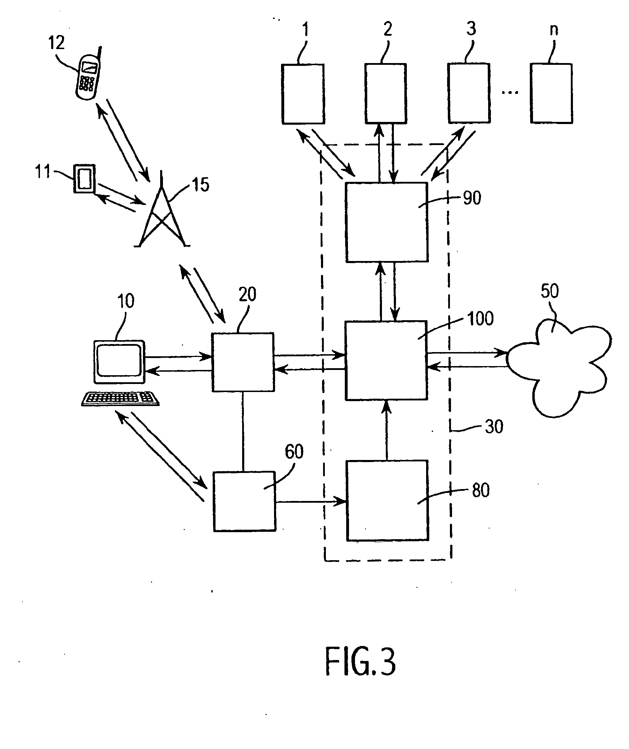

Sur la figure 3, le système d'accès comprend un serveur d'accès 20 et une plate-forme d'accès 30 en communication avec un réseau 50.

La plate-forme d'accès 30 comprend une base de données LDAP (Lightweight Directory Access Protocol) 80 recensant des informations relatives à un ensemble de clients, chaque client étant associé à un ensemble de services auxquels il a souscrit. La plate-forme 30 comprend en outre un module de marquage/démarquage 100 et un module de routage 90 apte à diriger les flux d'information vers des serveurs 1, 2, 3, ...n destinés à fournir des services.

Les terminaux clients pouvant se connecter au réseau peuvent être par exemple des ordinateurs 10, des assistants personnels 11 ou des téléphones mobiles 12 par l'intermédiaire d'un réseau de téléphonie mobile 15.

De manière classique, lorsque un terminal client 10 se connecte au serveur d'accès 20, un serveur d'authentification 60 affecte au terminal client 10 une adresse IP qui lui permettra d'échanger des informations avec le réseau 50. Le serveur d'authentification 60 transmet à la base de données LDAP 80 des informations associant l'adresse IP et l'identité du client 10. La base de données 80 retrouve les services associés à l'identité du client et transmet au module de marquage/démarquage 100 des informations associant l'adresse IP du client et les services souscrits par ce client.

En fonction de ces informations, le module de marquage/démarquage 100 insère dans les paquets de données qu'il reçoit en provenance du terminal client 10 une information relative aux services souscrits par le client. Il transmet ensuite les paquets de données marquées au module de routage 90. Le module de routage 90 détecte l'information de marquage et en fonction de cette information transmet le paquet de données au(x) serveur(s) 1, 2, 3 ...ou n concerné(s).

Le(s) serveur(s) 1, 2, 3, ...ou n traite(nt) le paquet de données et le renvoie(ent) vers le module de routage 90 qui le transmet au module de marquage/démarquage 100. Le module de marquage/démarquage 100 supprime l'information de marquage du paquet de données et le transmet au réseau 50.

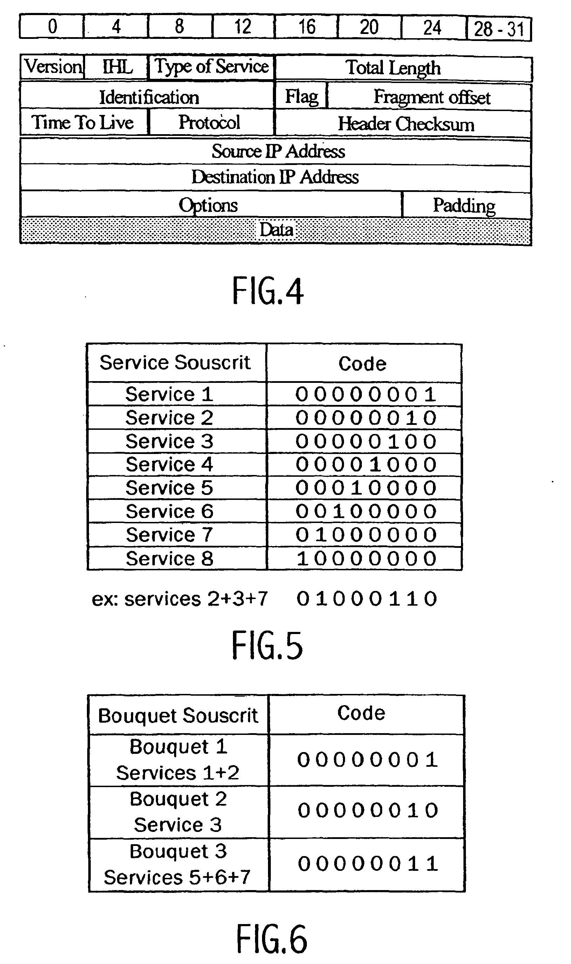

La figure 4 représente un exemple de structure d'un paquet IP de données. De manière connue, le paquet de données comprend des champs prédéfinis codés sur un certain nombre de bits.

Selon une mise en oeuvre de l'invention, l'information de marquage du paquet de données est inscrite dans le champ TOS (Type de service) du paquet de données. Ce champ se compose de 8 bits et contient initialement des informations relatives à l'ordre de priorité du paquet de données. Le module de marquage/démarquage 100 enregistre la valeur du champ TOS et la remplace par des informations relatives aux services souscrits par le client avant de l'envoyer vers le module de routage 90.

Le module de routage 90 lit les informations contenues dans le champ TOS et en déduit les serveurs de service auxquels il doit transmettre le paquet pour traitement. Dans le cas où le client n'a souscrit à aucun service, le module de routage 90 retransmet directement le paquet de données au module de marquage/démarquage 100.

Lorsque le paquet de données a été traité par les différents serveurs de services 1, 2, 3 ...ou n, le module de marquage/démarquage 100 supprime l'information de marquage contenue dans le champ TOS et rétablit les informations qui étaient initialement contenues dans ce champ.

Dans une autre mise en oeuvre de l'invention, l'information de marquage peut être inscrite dans un champ OPTIONS du paquet de données. L'avantage du champ OPTIONS est qu'il est codé sur 20 bits, il peut donc contenir plus d'informations que le champ TOS.

La figure 5 représente un exemple de codage possible des informations de marquage des données.

Dans le cas où l'information de marquage est inscrite dans le champ TOS, chaque bit de ce champ peut être associée à un service donné. Le bit vaut 0 lorsque le client n'a pas souscrit au service associé et vaut 1 lorsque le client y a souscrit.

Ainsi que représenté à la figure 6, on peut également définir des « bouquets » de services, c'est à dire à une combinaison de services. Dans ce cas, chaque code inscrit dans le champ TOS est associé à un bouquet.

Cette seconde possibilité, plus conforme aux offres commerciales, permet d'étendre les offres de services à 254 bouquets de service dans le cas de l'utilisation du champ TOS et plusieurs milliers dans le cas de l'utilisation du champ OPTIONS.

## Revendications

1. Plate-forme d'accès (30) à un réseau (50) offrant des services personnalisés, la plate-forme d'accès (30) étant apte à répartir des données vers des serveurs (1, 2, 3, ...n), chaque serveur étant destiné à traiter des données qu'il reçoit pour fournir un service donné, dans lequel la plate-forme d'accès (30) comprend:
- une base de données (80) contenant des informations relatives à un ensemble de clients, chaque client étant associé à un ensemble de services auxquels il a souscrit,
- un module de marquage (100) apte à insérer dans un champ prédéfini d'un paquet de données en provenance d'un terminal client (10) une information de marquage relative au(x) service(s) associé(s) au client dans la base de données (80),
- un module de routage (90) apte à diriger le paquet de données en provenance du terminal client (10) vers un ou des serveur(s) (1, 2, 3, ...n) en fonction de l'information de marquage insérée dans le paquet de données par le module de marquage (100) ;
**caractérisé en ce que** le module de marquage (100) est apte à enregistrer la valeur initiale du champ dans le paquet de données qu'il reçoit et à remplacer cette valeur par une information de marquage et **en ce que** après traitement du paquet de données par le ou les serveur(s) de service (1, 2, 3, ...n), le module de marquage (100) est apte à rétablir la valeur initiale du champ.

2. Plate-forme selon la revendication 1, **caractérisé en ce que** l'information de marquage est inscrite par le module de marquage (100) dans un champ TOS (Type de service) du paquet de données.

3. Plate-forme selon la revendication 1, **caractérisé en ce que** l'information de marquage est inscrite par le module de marquage (100) dans un champ OPTIONS du paquet de données.

4. Plate-forme selon l'une des revendications 1 à 3, **caractérisé en ce que** l'information de marquage est codée par une séquence de bits, chaque bit étant associé à un service.

5. Plate-forme selon l'une des revendications 1 à 3, **caractérisé en ce que** l'information de marquage est codée par une séquence de bits, chaque séquence étant associée à un bouquet de services.

6. Système d'accès à un réseau offrant des services personnalisés, **caractérisé en ce qu'**il comprend une plate-forme d'accès selon l'une des revendications 1 à 5 et un serveur d'authentification (60) apte à attribuer au terminal client (10) une adresse IP lorsque celui-ci se connecte à un serveur d'accès (20) à la plate-forme (30), ledit serveur d'authentification (60) étant apte à transmettre à la base de données (80) des informations associant l'adresse IP et l'identité du client, et la base de données étant apte à recevoir lesdites informations et à transmettre au module de marquage (100) des informations associant l'adresse IP du client et les services souscrits par ce client, le module de marquage (100) étant apte à lire l'adresse IP du paquet de données qu'il reçoit et en fonction de cette adresse, à insérer dans ce paquet de données une information de marquage.

7. Procédé d'accès à un réseau offrant des services personnalisés selon lequel:
- un client souscrit à un ensemble de services proposés par un fournisseur d'accès,
- le terminal client (10) se connecte à une plate-forme d'accès (30) au réseau (50) du fournisseur d'accès et transmet des données à la plate-forme (30),
- la plate-forme d'accès (30) répartit lesdites données vers des serveurs (1, 2, 3, ...n) de service en fonction des services auxquels le client a souscrit,
- les serveurs de service (1, 2, 3, ...n) traitent les données et les transmettent au réseau (50),
dans lequel la répartition des données vers des serveurs (1, 2, 3, .n) de service comprend les étapes selon lesquelles:
- un module de marquage (100) insère dans un champ prédéfini d'un paquet de données en provenance du terminal client (10) une information de marquage relative au(x) service(s) associé(s) au client,
- un module de routage (90) dirige le paquet de données en provenance du terminal client (10) vers un ou des serveur(s) (1, 2, 3, ...n) en fonction de l'information de marquage insérée dans le paquet de données par le module de marquage (100)
**caractérisé en ce que** le module de marquage (100) enregistre la valeur initiale du champ dans le paquet de données qu'il reçoit et remplace cette valeur par une information de marquage et **en ce que** après traitement du paquet de données par le ou les serveur(s) de service (1, 2, 3, ...n), le module de marquage (100) rétablit la valeur initiale du champ.

8. Procédé selon la revendication 7, **caractérisé en ce qu'**il comprend les étapes selon lesquelles:
- lorsque le client souscrit à un ou des service(s) proposés par le fournisseur d'accès, des informations relatives au client et au(x) service(s) au(x)quel(s) il a souscrit sont enregistrées dans une base de données (80),
- lorsque le terminal client (10) se connecte à un serveur d'accès (20) à la plate-forme (30), un serveur d'authentification (60) attribue audit terminal client (10) une adresse IP,
- ledit serveur d'authentification (60) transmet à la base de données (80) des informations associant l'adresse IP et l'identité du client,
- la base de données (80) transmet au module de marquage (100) des informations associant l'adresse IP du client et les services souscrits par ce client,
- le module de marquage (100) lit l'adresse IP du paquet de données qu'il reçoit et en fonction de cette adresse, insère dans ce paquet de données une information de marquage.

9. Procédé selon l'une des revendications 7 ou 8, **caractérisé en ce que** le module de marquage (100) inscrit l'information de marquage dans un champ TOS (Type de service) du paquet de données.

10. Procédé selon l'une des revendications 7 ou 8, **caractérisé en ce que** le module de marquage (100) inscrit l'information de marquage dans un champ OPTIONS du paquet de données.

11. Procédé selon l'une des revendications 7 à 10, **caractérisé en ce que** l'information de marquage est codée par une séquence de bits, chaque bit étant associé à un service.

12. Procédé selon l'une des revendications 7 à 10, **caractérisé en ce que** l'information de marquage est codée par une séquence de bits, chaque séquence étant associée à un bouquet de services.

## Patentansprüche

1. Plattform (30) für den Zugang zu einem Netz (50), das personalisierte Dienste anbietet, wobei die Zugangsplattform (30) dafür ausgelegt ist, Daten an Server (1, 2, 3, ... n) zu verteilen, wobei jeder Server dazu bestimmt ist, Daten, die er empfängt, zu verarbeiten und einen gegebenen Dienst zu liefern, wobei die Zugangsplattform (30) Folgendes umfasst:
- eine Datenbank (80), die Informationen bezüglich einer Gesamtheit von Kunden enthält, wobei jeder Kunde einer Gesamtheit von Diensten zugeordnet ist, die er abonniert hat,
- ein Markierungsmodul (100), das in ein im Voraus definiertes Feld eines Datenpakets, das von einem Kundenendgerät (10) stammt, Markierungsinformationen bezüglich eines oder mehrerer Dienste, die dem Kunden in der Datenbank (80) zugeordnet sind, einfügen kann,
- ein Lenkungsmodul (90), das das Datenpaket, das von dem Kundenendgerät (10) stammt, als Funktion der Markierungsinformationen, die in das Datenpaket durch das Markierungsmodul (100) eingefügt worden sind, zu einem oder mehreren Servern (1, 2, 3, ... n) lenken kann;
**dadurch gekennzeichnet, dass** das Markierungsmodul (100) den Anfangswert des Feldes in dem Datenpaket, das es empfängt, eintragen kann und diesen Wert durch Markierungsinformationen ersetzen kann und dass nach der Verarbeitung des Datenpakets durch den einen oder die mehreren Dienst-Server (1, 2, 3, ... n) das Markierungsmodul (100) den Anfangswert des Feldes wiederherstellen kann.

2. Plattform nach Anspruch 1, **dadurch gekennzeichnet, dass** die Markierungsinformationen durch das Markierungsmodul (100) in ein TOS-Feld (Diensttypfeld) des Datenpakets geschrieben werden.

3. Plattform nach Anspruch 1, **dadurch gekennzeichnet, dass** die Markierungsinformationen durch das Markierungsmodul (100) in ein OPTIONS-Feld des Datenpakets geschrieben werden.

4. Plattform nach einem der Ansprüche 1 bis 3, **dadurch gekennzeichnet, dass** die Markierungsinformationen durch eine Bitfolge codiert sind, wobei jedes Bit einem Dienst zugeordnet ist.

5. Plattform nach einem der Ansprüche 1 bis 3, **dadurch gekennzeichnet, dass** die Markierungsinformationen durch eine Bitfolge codiert sind, wobei jede Folge einem Strauß von Diensten zugeordnet ist.

6. System für den Zugang zu einem Netz, das personalisierte Dienste anbietet, **dadurch gekennzeichnet, dass** es eine Zugangsplattform nach einem der Ansprüche 1 bis 5 und einen Authentifizierungs-Server (60) umfasst, der dem Kundenendgerät (10) eine IP-Adresse zuweisen kann, wenn dieses sich bei der Plattform (30) mit einem Zugangs-Server (20) verbindet, wobei der Authentifizierungs-Server (60) zu der Datenbank (80) Informationen senden kann, die die IP-Adresse und die Identität des Kunden zuordnen, und die Datenbank diese Informationen empfangen kann und zu dem Markierungsmodul (100) Informationen senden kann, die die IP-Adresse des Kunden und die durch diesen Kunden abonnierten Dienste zuordnen, wobei das Markierungsmodul (100) die IP-Adresse des Datenpakets, das es empfängt, lesen kann und als Funktion dieser Adresse in dieses Datenpaket Markierungsinformationen einfügen kann.

7. Verfahren für den Zugang zu einem Netz, das personalisierte Dienste bietet, wobei:
- ein Kunde eine Gesamtheit von Diensten abonniert, die von einem Zugangsanbieter vorgeschlagen werden,
- das Kundenendgerät (10) sich bei einer Zugangsplattform (30) mit dem Netz (50) des Zugangsanbieters verbindet und Daten zu der Plattform (30) sendet,
- die Zugangsplattform (30) die Daten als Funktion der Dienste, die der Kunde abonniert hat, auf die Dienst-Server (1, 2, 3, ... n) verteilt,
- die Dienstserver (1, 2, 3, ... n) die Daten verarbeitet und sie zu dem Netz (50) sendet,
- wobei das Verteilen der Daten auf die Dienst-Server (1, 2, 3, ... n) Schritte umfasst, gemäß denen:
- ein Markierungsmodul (100) in ein im Voraus definiertes Feld eines Datenpakets, das von dem Kundenendgerät (10) stammt, Markierungsinformationen bezüglich des einen oder der mehreren Dienste, die dem Kunden zugeordnet sind, einfügt,
- ein Lenkungsmodul (90) das Datenpaket, das von dem Kundenendgerät (10) stammt, als Funktion der Markierungsinformationen, die in das Datenpaket durch das Markierungsmodul (100) eingefügt worden sind, zu einem oder mehreren Servern (1, 2, 3, ... n) lenkt, **dadurch gekennzeichnet, dass** das Markierungsmodul (100) den Anfangswert des Feldes in das Datenpaket, das er empfängt, einträgt und diesen Wert durch Markierungsinformationen ersetzt und dass nach der Verarbeitung des Datenpakets durch den einen oder die mehreren Dienst-Server (1, 2, 3, ... n) das Markierungsmodul (100) den Anfangswert des Feldes wieder herstellt.

8. Verfahren nach Anspruch 7, **dadurch gekennzeichnet, dass** es Schritte umfasst, gemäß denen:
- dann, wenn der Kunde einen oder mehrere Dienste abonniert, die von dem Zugangsanbieter vorgeschlagen werden, Informationen bezüglich des Kunden und des einen oder der mehreren Dienste, die er abonniert hat, in eine Datenbank (80) eingetragen werden,
- dann, wenn sich das Kundenendgerät (10) mit einem Zugangsserver (20) bei der Plattform (30) verbindet, ein Authentifizierungs-Server (60) dem Kundenendgerät (10) eine IP-Adresse zuweist,
- der Authentifizierungs-Server (60) zu der Datenbank (80) Informationen sendet, die die IP-Adresse und die Identität des Kunden zuordnen,
- die Datenbank (80) zu dem Markierungsmodul (100) Informationen sendet, die die IP-Adresse des Kunden und die Dienste, die dieser Kunde abonniert hat, zuordnen,
- das Markierungsmodul (100) die IP-Adresse des Datenpakets, das es empfängt, liest und als Funktion dieser Adresse in dieses Datenpaket Markierungsinformationen einfügt.

9. Verfahren nach einem der Ansprüche 7 oder 8, **dadurch gekennzeichnet, dass** das Markierungsmodul (100) die Markierungsinformationen in ein TOS-Feld (Diensttypfeld) des Datenpakets schreibt.

10. Verfahren nach einem der Ansprüche 7 oder 8, **dadurch gekennzeichnet, dass** das Markierungsmodul (100) Markierungsinformationen in ein OPTIONEN-Feld des Datenpakets schreibt.

11. Verfahren nach einem der Ansprüche 7 bis 10, **dadurch gekennzeichnet, dass** die Markierungsinformationen durch eine Bitfolge codiert sind, wobei jedes Bit einem Dienst zugeordnet ist.

12. Verfahren nach einem der Ansprüche 7 bis 10, **dadurch gekennzeichnet, dass** die Markierungsinformationen durch eine Bitfolge codiert sind, wobei jede Folge einem Strauß von Diensten zugeordnet ist.

## Claims

1. Access platform (30) for a network (50) offering personalized services, the access platform (30) being capable of distributing data to servers (1,2,3,...n), each server being intended to process data that it receives in order to provide a given service, in which the access platform (30) comprises:
- a database (80) containing information relating to a set of clients, each client being associated with a set of services to which it has subscribed,
- a marking module (100) capable of inserting into a predefined field of a data packet originating from a client terminal (10) an item of marking information relating to the service(s) associated with the client in the database (80),
- a routing module (90) capable of directing the data packet originating from the client terminal (10) to one or more server(s) (1,2,3,...n) depending on the item of marking information inserted into the data packet by the marking module (100);
**characterized in that** the marking module (100) is capable of storing the initial value of the field in the data packet that it receives and of replacing this value by an item of marking information and **in that** after processing of the data packet by the service server(s) (1,2,3,...n), the marking module (100) is capable of restoring the initial value of the field.

2. Platform according to Claim 1, **characterized in that** the item of marking information is written by the marking module (100) into a TOS (type of service) field of the data packet.

3. Platform according to Claim 1, **characterized in that** the item of marking information is written by the marking module (100) into an OPTIONS field of the data packet.

4. Platform according to one of Claims 1 to 3, **characterized in that** the item of marking information is encoded by a sequence of bits, each bit being associated with a service.

5. Platform according to one of Claims 1 to 3, **characterized in that** the item of marking information is encoded by a sequence of bits, each sequence being associated with a package of services.

6. Access system for a network offering personalized services, **characterized in that** it comprises an access platform according to one of Claims 1 to 5 and an authentication server (60) capable of attributing an IP address to the client terminal (10) when the latter connects to an access server (20) for the platform (30), said authentication server (60) being capable of transmitting to the database (80) information associating the IP address and the identity of the client, and the database being capable of receiving said information and of transmitting to the marking module (100) information associating the IP address of the client and the services to which this client has subscribed, the marking module (100) being capable of reading the IP address of the data packet that it receives and, depending on this address, of inserting an item of marking information into this data packet.

7. Access method for a network offering personalized services according to which:
- a client subscribes to a set of services proposed by an access provider,
- the client terminal (10) connects to an access platform (30) for the network (50) of the access provider and transmits data to the platform (30),
- the access platform (30) distributes said data to service servers (1,2,3,...n) depending on the services to which the client has subscribed,
- the service servers (1,2,3,...n) process the data and transmit them to the network (50),
in which the distribution of the data to service servers (1,2,3,...n) comprises the steps according to which:
- a marking module (100) inserts into a predefined field of a data packet originating from the client terminal (10) an item of marking information relating to the service(s) associated with the client,
- a routing module (90) directs the data packet originating from the client terminal (10) to one or more server(s) (1,2,3,...n) depending on the item of marking information inserted into the data packet by the marking module (100);
**characterized in that** the marking module (100) stores the initial value of the field in the data packet that it receives and replaces this value by an item of marking information and **in that** after processing of the data packet by the service server(s) (1,2,3,...n), the marking module (100) restores the initial value of the field.

8. Method according to Claim 7, **characterized in that** it comprises the steps according to which:
- when the client subscribes to one or more service (s) proposed by the access provider, information relating to the client and to the service (s) to which it has subscribed are stored in a database (80),
- when the client terminal (10) connects to an access server (20) for the platform (30), an authentication server (60) attributes an IP address to said client terminal (10),
- said authentication server (60) transmits to the database (80) information associating the IP address and the identity of the client,
- the database (80) transmits to the marking module (100) information associating the IP address of the client and the services to which this client has subscribed,
- the marking module (100) reads the IP address of the data packet that it receives and, depending on this address, inserts an item of marking information into this data packet.

9. Method according to either of Claims 7 and 8, **characterized in that** the marking module (100) writes the item of marking information into a TOS (type of service) field of the data packet.

10. Method according to either of Claims 7 and 8, **characterized in that** the marking module (100) writes the item of marking information into an OPTIONS field of the data packet.

11. Method according to one of Claims 7 to 10, **characterized in that** the item of marking information is encoded by a sequence of bits, each bit being associated with a service.

12. Method according to one of Claims 7 to 10, **characterized in that** the item of marking information is encoded by a sequence of bits, each sequence being associated with a package of services.
